(19)

Europäisches Patentamt

European Patent Office

Office européen des brevets

(11)  **EP 3 337 640 B1**

(12)  # EUROPEAN PATENT SPECIFICATION

(45) Date of publication and mention
of the grant of the patent:
**01.12.2021  Bulletin 2021/48**

(51) Int Cl.:
***B23Q 7/00*** *(2006.01)*     ***B23Q 39/04*** *(2006.01)*

(21) Application number: **16766831.8**

(86) International application number:
**PCT/CZ2016/000092**

(22) Date of filing: **18.08.2016**

(87) International publication number:
**WO 2017/028827 (23.02.2017 Gazette 2017/08)**

(54) **MULTI-SPINDLE MACHINE TOOL**

MEHRSPINDEL-WERKZEUGMASCHINE

MACHINE-OUTIL MULTIBROCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.08.2015  CZ 20150561**

(43) Date of publication of application:
**27.06.2018  Bulletin 2018/26**

(73) Proprietor: **CVUT V Praze, Fakulta Strojní
166 07 Praha 6 (CZ)**

(72) Inventor: **VALÁSEK, Michael
14300 Praha 4 (CZ)**

(74) Representative: **Novotny, Karel
Zufanova 2/1099
163 00 Praha 6 (CZ)**

(56) References cited:
**EP-A2- 0 807 490     US-A- 4 554 723**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

Technical Field of the Invention

The invention concerns a multi-spindle machine tool for performing at least two different operations on a work-piece clamped in a work-piece carrier, where for each operation on the work-piece a tool attached in a tool carrier is arranged on the machine tool.

State-of-the-art

Today's multi-spindle machine tools are usually made by combining more classic CNC lathes into one machine. A base of the lathe is a spindle turning the work-piece, therefore it is called a multi-spindle automatic lathe, in general a multi-spindle machine tool. A structural design typically comprises a rotary drum bearing several spindles with tools located around them. Then, a multi-spindle automatic machine is a machine comprising more tools attached in separate tool carriers, whereas after finishing one operation, a work-piece is given over between these tools attached in separate tool carriers to a following operation to be performed in a sequence of a manufacturing procedure for this work-piece, as described in EP 0 807 490 A2.

Generally, on nowadays multi-spindle machine tools the carried work-piece on which more operations are to be performed is moved gradually from the first operation area, where the first operation is carried out by the first tool, to the second operation area, where the second operation is carried out by the second tool as far as the n-th operation area, where the n-th operation is carried out by the n-th tool. An advantage of multi-spindle machine tools is that a work-piece is clamped to the machine at the beginning of the first operation and released from the machine no sooner than all the required operations have been finished. A goal is met - a relatively fast required processing of a work-piece, given by the fact that the work-piece need not to be released from a machine after one finished operation and to be clamped to the machine again for a following operation to be performed.This advantage is evident especially in cases when periods of individual operations are the same. In a case that durations of particular operations are different, work-pieces are always moved from one operation to the following one after the longest operation is finnished. This substantially decreases the production productivity in the case of higly different duration for performing the shortest and the longest operation carried out on a work-piece. A further decrease in the production productivity is determined by time losses when moving a work-piece from an area of one operation to an area of a following operation, as described in US 4 554 723 A.

When using more machines/tools for more work-pieces together, we can obtain more work-pieces machined, however, all of them no sooner than after an identically long duration of this operation. Thus, there is no time saved. The continuous production time is the same. Although it applies that more machines/tools can machine more work-pieces, the production time is not shortened and operations with a shorter time of performing should also have more machines/tools not to become a new bottleneck.

Generally, in order to make manufacturing with more operations faster, more machines/tools are involved in the manufacturing process, however, it is not clear and easy how to divide them optimally between particular operations and to arrange in time and space. A goal is an optimum when none of machined work-pieces awaits and thus has no idle time, when all work-pieces are machined efficiently all the time and never wait, whereas a number of non-used machines/tools is minimum while moving the work-pieces.

The aim of this invention is a multi-spindle machine tool with enhanced productivity of work-piece machining in comparison with existing machine tools.

Subject Matter of the Invention

A subject matter of a multi-spindle machine tool for performing at least two different operations on a work-piece arranged on a trajectory of work-piece carriers, where for each operation on the work-piece a tool attached to a tool carrier is arranged on a trajectory of tool carriers on the machine, lies in that a number of work-pieces on the trajectory of work-piece carriers for performing a particular operation is the same as a number of tools on the trajectory of carriers with tools performing this operation, whereas this number is higher for operations needing a longer time to be performed than for operations needing a shorter time and in the particular operations is proportional to carriers disponible within a range of an angle or area for performing the particular operation. Work-pieces on their trajectory of work-piece carriers and tools on their trajectory of carriers with tools performing the operations move towards a frame in a continuous uninterrupted motion at a congruent velocity given by v1 velocity in one direction, whereas a motion of tool carriers moved to a reverse trajectory of tool carriers is in the opposite direction.

Work-pieces and tools performing operations are motionless towards a frame, whereas a motion of tool carriers moved to the reverse trajectory is in the opposite direction than the operation sequence. Tools and work-pieces are arranged on a circular trajectory of carriers of work-pieces or tools, possibly on a nonclosed trajectory of carriers for work-pieces or tools and they can be arranged on more trajectories.

Tools for the same operation are arranged one after another in a direction of the tool carrier motion.

One work-piece can be in the work contact with more tools at the same time.

Tools on the reverse trajectory can be in the work engagement with additional work-pieces.

For each operation, next to tools on the trajectory of carriers with tools performing a defined operation, at least one further tool is located on the reverse trajectory of tool carriers, whereas the same number of tools is on the reverse trajectory for the defined operation as the number of tools performing this operation on the tool carrier trajectory.

The particular trajectories of work-piece carriers, tool carriers and reverse trajectories with tools may have parallel branches for one or more operations in case of need.

An advantage of this multi-spindle machine tool consists in enhancement in production of quantity of machined work-pieces within a time unit, especially in cases when more operations are carried out on one work-piece, when durations of the particular operations are substantially different.

Overview of Figures in Drawings

The attached Figures show schematic depictions of the multi-spindle machine tool as described in the invention, where

> Fig. 1 shows one of the embodiments,

> Fig. 2 shows the embodiment from Fig. 1 in the phase of finishing the operations,

> Fig. 3 shows the embodiment from Fig. 1 in the phase of tools letting in and out,

> Fig. 4 shows the embodiment from Fig. 1 in the phase of a following operation,

> Fig. 5 shows another embodiment of the machine, where a work-piece does not move towards the frame,

> Fig. 6 shows the embodiment from Fig. 5 in the phase of finishing the operations,

> Fig. 7 shows the embodiment from Fig. 5 in the phase of tools letting in and out,

> Fig. 8 shows the embodiment from Fig. 5 in the phase of a following operation,

> Fig. 9 shows another embodiment of the machine,

> Fig. 10 shows another embodiment of the machine,

> Fig. 11 shows a possible embodiment of non-circular trajectories of work-piece carriers and tool carriers,

> Fig. 12 shows a possible branching of trajectories of work-piece carriers and tool carriers

Examples of the Embodiments of the Invention

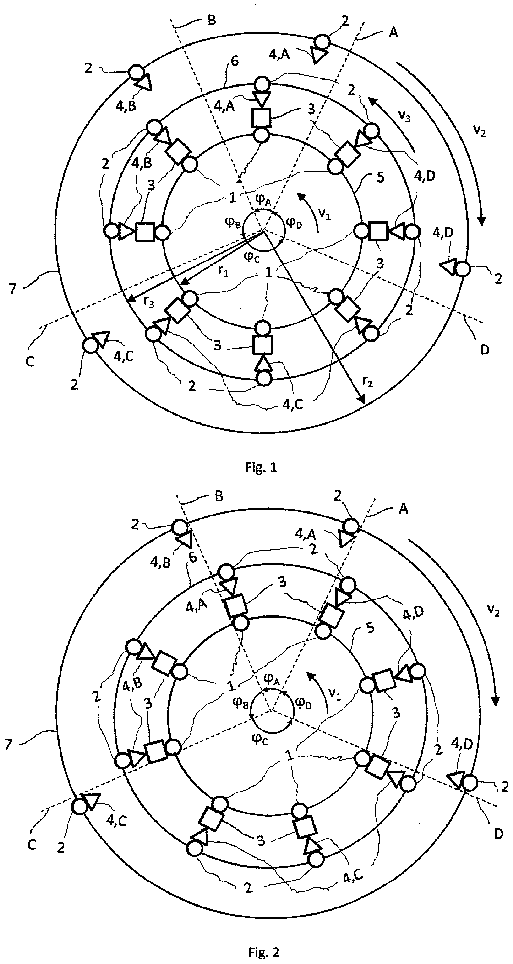

Fig. 1 shows a schematic depiction of a basic embodiment of the multi-spindle machine tool. In principle, this is a section or a view in the direction of axes of carriers 1 of work-pieces 3. Work-pieces 3 clamped in the machine tool in carriers 1 move during particular machining operations along trajectory 5 of work-piece carriers, in this case a circular one, at velocity v1. Tools 4 attached to the machine tool in carriers 2 perform particular operations, while moving at velocity v1 along trajectory 6 of tool carriers, in this case also a circular one. Besides tools 4 being in a contact with work-pieces 3 when performing machining operations, there are tools 4 in carriers 2 on the machine, in this case on its outer circumference, not being in a contact with work-pieces 3 and not performing machining operations and moving on the reverse trajectory 7 at velocity v2 in the opposite direction than work-pieces 3. A motion of work-piece carriers 1 is a continuous uninterrupted motion, which means that a course of velocity of machined work-pieces 3 is continuous and the velocity may be zero only for a certain short time moment representing a technically realizable stopping and immediate starting again. However, this is not a time interval needed for a move of a work-piece from one place to another, as with today's multi-spindle machine tools.

In this case of the machine tool embodiment the work-piece carrier trajectory 5, tool carrier trajectory 6 and reverse trajectory 7 are circular and velocities v1 and v2 are such that the angular velocity of carriers 1 with work-pieces 3 on work-piece carrier trajectory 5 is congruent with the angular velocity of carriers 2 with tools 4 on both the trajectories 6 (tool carriers) and 7 (reverse). In the depicted example of the machine tool, four operations, namely A, B, C and D, are carried out on work-pieces 3. Operation A is carried out within a range of $\varphi A$ angle, operation B within a range of $\varphi B$ angle, operation C within a range of $\varphi C$ angle, and operation D within a range of $\varphi D$ angle. In this case, the particular operations do not last for the same time, therefore different number of tools 4 are used for the respective operations, when for the shortest operation A one tool 4,A is used, for a longer operation B two tools 4,B are used, for the longest operation C three tools 4,C are used and for the last operation D corresponding to the duration of operation B two tools 4,D are used. Thus a congruent duration or a duration as congruent as possible can be reached for performing all operations A, B, C, D, in spite of the fact that times for the particular operations, if each of them carried out by one tool, would be considerably different.

On work-piece carrier trajectory 5 of a motion of places for clamping the work-pieces, there are eight places 1 with clamped work-pieces 3 arranged, which are machined by tools 4 carried by carriers 2 for attaching tools 4. Places 1 move along work-piece carrier trajectory 5 at velocity v1. Work-piece carrier trajectory 5 is in this given case formed by a circle of radius r1. Carriers 2 carrying tools 4 move congruently as carriers 1 with attached work-pieces 3. In the said embodiment, tool carrier trajectory 6 of a motion of carriers 2 carrying tools 4 is also a circle, as work-piece carrier trajectory 5, and its radius is r3. The basic velocity of a motion of carriers 2 carrying tools 4 along tool carrier trajectory 6 is given $v3= v1r3/r1$. On this velocity, the velocity of motions of the particular tool 4 towards work-piece 3 during the very machining operations is superposed. As a matter of fact, this is a combination of a large move of tool 4 towards the frame and its small motion towards work-piece 3. Carriers 1 with clamped work-pieces 3 move towards the frame in a continuous uninterrupted motion.

The multi-spindle machine tool performs machining operations A, B, C, D on work-pieces 3.

Generally, clamping of a new semi-product and withdrawal of a finished work-piece is included in machining operations, too. Machining operations A, B, C, D are performed during a motion of places 1 at velocity v1 in angles $\varphi A$, $\varphi B$, $\varphi C$, $\varphi D$. Lengths of these angles relate to lengths of durations of relevant machining operations, for example machining operation A lasts for a duration $tA= r1\varphi A/v1$. When machining operation A is finished, tool 4,A is disengaged by carrier 2 and tool 4,B, is engaged, which then becomes tool 4,B performing machining operation B. In this moment, clamped work-piece 3 is moved from $\varphi A$ angle to $\varphi B$ angle by crossing over B boundary. Disengaged tool 4,A moves to reverse trajectory 7 and is moved at velocity v2 to the beginning of angle $\varphi A$, so that after finishing operation D it can be engaged in a newly put-in work-piece 3. Lengths of angles $\varphi A$, $\varphi B$, $\varphi C$, $\varphi D$ correspond to a number of places 1 with clamped work-pieces 3 in respective angles $\varphi A$, $\varphi B$, $\varphi C$, $\varphi D$. A basic rule is that a number of places 1 with clamped work-pieces 3 machined by relevant tools 4 is higher for performing an operation requiring a longer time than a number of places 1 with clamped work-pieces 3 machined by relevant tools 4 for performing an operation requiring a shorter time. The number of places 1 with clamped work-pieces 3 machined by relevant tools 4 is typically determined by rounding the relationship to a natural number.

The number of places 1 with clamped work-pieces for operation A is nA created by rounding the relationship

$$nA = n \,\varphi A/2\pi = n \,tA/(tA+ tB+ tC+ tD)$$

to a natural number, so that $n= nA+ nB+ nC+ nD$, where n is a number of disponible carriers 1 of work-pieces 3 on work-piece carrier trajectory 5 equal to a number of carriers 2 of tools 4 on tool carrier trajectory 6, which are disponible on the given multi-spindle machine tool. A higer number of places or tools nA always occurs, when the rounding according to relationship $nA = n \,\varphi A/2\pi = n \,tA/(tA+ tB+ tC+ tD)$ allows. The time needed for machining a work-piece by all the operations equals the highest of the quotients tA/nA, tB/nB, tC/nC, tD/nD.

Velocity v2 of moving the disengaged tools 4 using carriers 2 to reverse trajectory 7 to the beginning of the respective angle is determined, so that the time needed for the return of the disengaged tool 4 equals the time for performing the particular operation. Thus $v2= r2\varphi A/tA=r2v1/r1$.

Fig. 2 schematically depicts a moment when the particular operations are finished. In this moment carriers 1 with work-pieces 3 and carriers 2 with tools 4 on tool carrier trajectory 6, which work on the respective work-pieces with which they are in a contact, get near to the dashed line boundaries A, B, C, D of relevant angles $\varphi A$, $\varphi B$, $\varphi C$, $\varphi D$ in the direction of velocity v1. At the same time, carriers 2 with tools 4, which do not work, relevant to the adjacent angles (thus with tools from the adjacent angles), moving along reverse trajectory 7 in the direction of velocity v2, get near to the dashed line boundaries A, B, C, D from the opposite side. For example, work-piece 3 machined by tool 4,A moves to boundary B from the right side and, at the same time, tool 4,B moving to reverse trajectory 7 gets near to boundary B from the left side. Similarly, work-piece 3 machined by tool 4,B and tool 4,C moving to reverse trajectory 7 get near to boundary C, work-piece 3 machined by tool 4,C and tool 4,D moving to reverse trajectory 7 get near to boundary D and work-piece 3 machined by tool 4,D and tool 4,A moving to reverse trajectory 7 get near to boundary A. For simplicity, in these schematic depictions we assume following the sequence of operations A, B, C, D in a circle. The first operation is clamping a semi-product of work-piece 3 and the last operation is withdrawing the finished work-piece 3 from the machine tool.

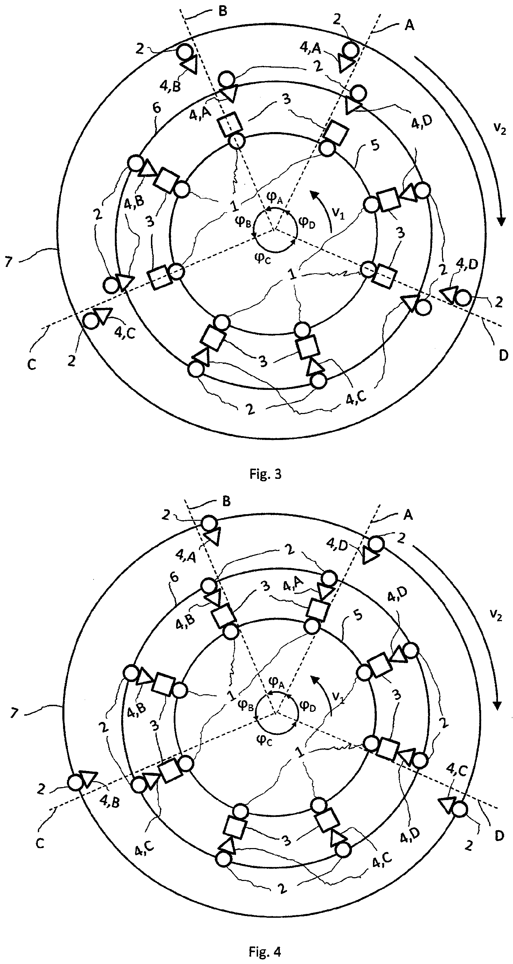

Fig. 3 schematically depicts further activity of the machine tool. During the move of carriers 1 with work-pieces 3 across A, B, C, D boundaries of particular angles $\varphi A$, $\varphi B$, $\varphi C$, $\varphi D$, carriers 2 with tools 4 on tool carrier trajectory 6 get disengaged from the respective work-pieces 3 and move as far as the reverse trajectory 7 and, at the same time, carriers 2 with tools 4 moved to reverse trajectory 7 get engaged in the respective work-pieces 3 on the tool carrier trajectory 6. For example, on boundary B tool 4,A is disengaged and tool 4,B is engaged. An exchange of positions of carriers 2 with tools 4 occurs between tool carrier trajectory 6 and reverse trajectory 7.

Fig. 4 schematically depicts further activity of the machine tool. Carriers 2 with tools 4 engaged in work-pieces 3 begin to work and they simultaneously move along tool carrier trajectory 6 at a congruent angular velocity determined by velocity v1 as carriers 1 with work-pieces 3 on work-piece carrier trajectory 5. Carriers 2 with tools 4 disengaged from work-pieces 3 stop working and they simultaneously move along reverse trajectory 7 at the angular velocity determined by velocity v2 congruent as, but opposite to, carriers 1 with work-pieces 3 on work-piece carrier trajectory 5. By this a move of these disengaged tools 4 to the beginning of respective angles $\varphi A$, $\varphi B$, $\varphi C$, $\varphi D$ in the direction of velocity v2 is started.

Velocities v1 and v2 are such that work-piece 3 can be during the move within the relevant angle machined by the particular operation and simultaneously the moving tool is moved within the relevant angle to its other end.

We do not mention the beginning of machining of work-pieces 3, when in the machine only one first work-piece 3 is put in section A and the operation only runs on this momentarily only one work-piece 3. After finishing the operation, the second new work-piece 3 is put in and the first work-piece 3 is located in the section for performing the second operation B. After finishing operation A on the second work-piece 3, the third work-piece 3 is put in and the second work-piece 3 moves on to the operation B section. Then, follow-up, work-pieces 3 move on to following sections for operations C and D and only after the eighth work-piece 3 having been put in, the machine tool capacity is fully used with all tools 2 working.

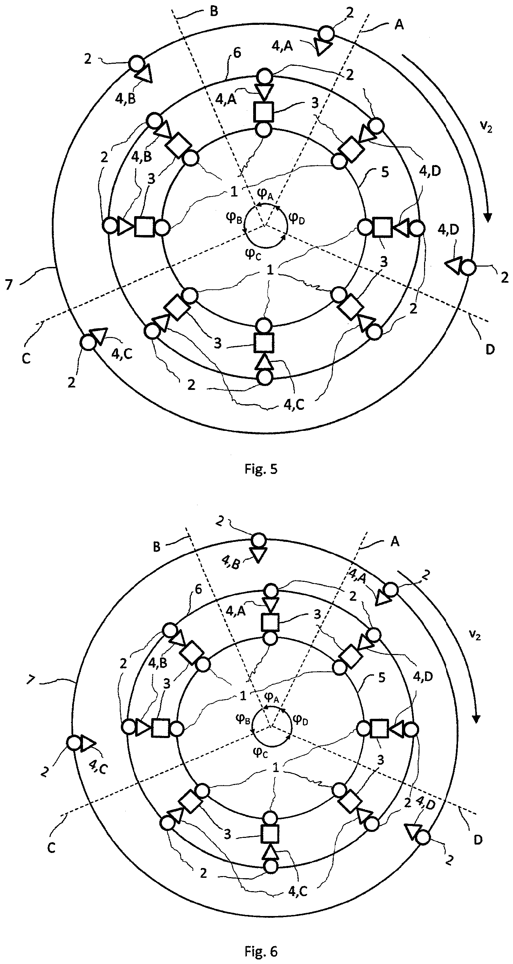

Fig. 5 shows a schematic depiction of another variant of the arrangement of the multi-spindle machine tool. Work-pieces 3 and relevant machining tools 4 do not move during the particular machining operations. After having finished each operation on work-piece 3, tool 4, which has finished the operation, moves to reverse trajectory 7 and moves back at velocity v2 to the beginning of the particular operation for being ready to engage in a newly put-in work-piece 3 for performing operation A or in work-piece 3 moved over from the finished previous operation A, similarly for other operations A, B, C, D. Velocity v2 is such that the move of tool 4 along reverse trajectory 7 can be performed during a time needed for performing the operation. This Fig. 5 shows performing of particular machining operations A, B, C, D and moving of carriers 2 with tools 4,A, 4,B, 4,C, 4,D to reverse trajectory 7.

Fig. 6 schematically depicts a moment when particular operations are finished. In this moment, carriers 2 with tools 4 moved-over to reverse trajectory 7 get near work-pieces 3. For example, carrier 2 with tool 4,B gets near work-piece 3 with operation A being finished using tool 4,A in φA angle, carrier 2 with tool 4,C gets near work-piece 3 with operation B being finished using tool 4,B in φB angle, carrier 2 with tool 4,D gets near work-piece 3 with operation C being finished using tool 4,C in φC angle, carrier 2 with tool 4,A gets near work-piece 3 with operation D being finished using tool 4,D in φD angle.

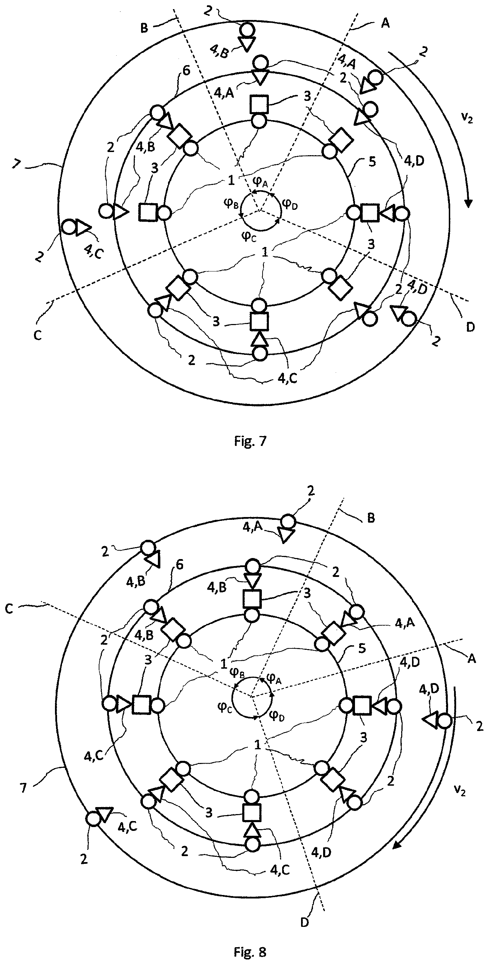

Fig. 7 schematically depicts further activity of the machine tool. Carriers 2 with tools 4 on tool carrier trajectory 6, which machined work-pieces 3, get disengaged from the respective work-pieces 3 and move as far as the reverse trajectory 7 and, at the same time, carriers 2 with tools 4 moved to reverse trajectory 7 get engaged in the respective work-piece 3 on the tool carrier trajectory 6. For example, carrier 2 with tool 4,A gets disengaged from work-piece 3 and carrier 2 with tool 4,B gets engaged in work-piece 3 in φA angle, carrier 2 with tool 4,B gets disengaged from work-piece 3 and carrier 2 with tool 4,C gets engaged in work-piece 3 in φB angle, carrier 2 with tool 4,C gets disengaged from work-piece 3 and carrier 2 with tool 4,D gets engaged in work-piece 3 in φC angle, carrier 2 with tool 4,D gets disengaged from work-piece 3 and carrier 2 with tool 4,A gets engaged in work-piece 3 in φD angle.

Fig. 8 schematically depicts further activity of the machine tool. Carriers 2 with tools 4 engaged in work-pieces 3 begin machining and do not move along tool carrier trajectory 6. Carriers 2 with tools 4 disengaged from work-pieces 3 stop working and they simultaneously move along reverse trajectory 7 at velocity v2, so that they can move to the next finished work-piece 3 while the operation is being performed. This can be depicted by turning dashed line boundaries of respective angles in the direction of velocity v2. By this a move of these disengaged tools 4 to the beginning of respective angles φA, φB, φC, φD in the direction of velocity v2 is started. For example, carrier 2 with tool 4,A on tool carrier trajectory 6, along which it does not move, now performs machining operations on work-piece 3 within φA angle, which in Fig. 5-6 was machined by tool 4,D within φD angle. Similarly, carrier 2 with tool 4,B on tool carrier trajectory 6, along which it does not move, now performs machining operations on work-piece 3 within φB angle, which in Fig. 5-6 was machined by tool 4,A within φA angle; carrier 2 with tool 4,C on tool carrier trajectory 6, along which it does not move, now performs machining operations on work-piece 3 within φC angle, which in Fig. 5-6 was machined by tool 4,B within φB angle; carrier 2 with tool 4,D on tool carrier trajectory 6, along which it does not move, now performs machining operations on work-piece 3 within φD angle, which in Fig. 5-6 was machined by tool 4,C within φC angle.

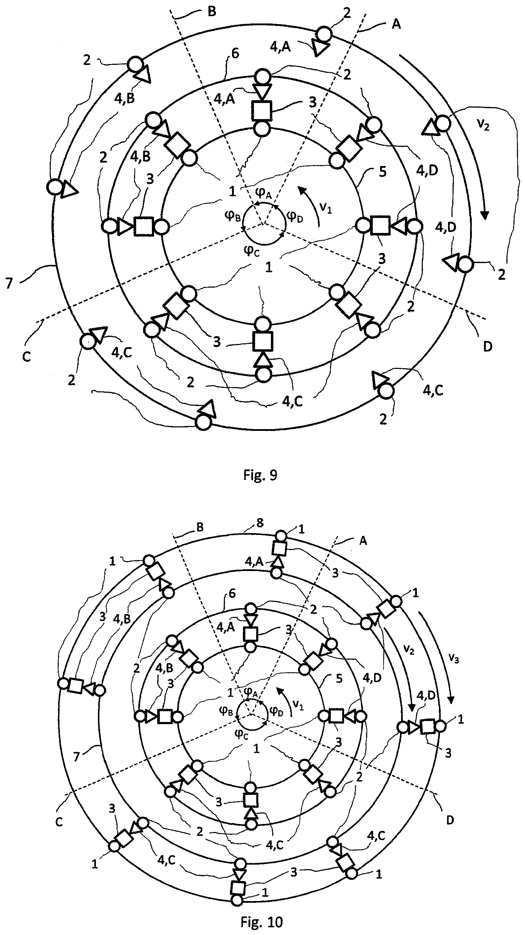

Fig. 9 shows a schematic depiction of another alternative embodiment of the multi-spindle machine tool. In contrast to the arrangement in Figs. 1-8 more carriers 2 with tools 4 are used for performing operations B, C, D, where the increased number of tools not performing a machining operation are moved to reverse trajectory 7 while machining operations are being performed, thus the time for the move can be reduced, this means velocity v2 for moving the relevant carrier 2 with tool 4 to the beginning of the relevant φB, φC, φD angle can be lower. In the said case so many carriers with tools 4 moved over to reverse trajectory 7 are used, how many carriers 2 with tools 4 performing machining operations on tool carrier trajectory 6 are.

Fig. 10 shows a schematic depiction of another alternative embodiment of the multi-spindle machine tool. In contrast to the embodiment in Figs. 1-4, carriers 2 with tools 4 moved over to reverse trajectory 7 during their return to the beginning of the relevant angle are used for machining the moving additional work-pieces 3 carried by carriers 1 on outer trajectory 8. These are different work-pieces usually from another multi-spindle machine tool and they may be machined in order to utilize even the moving tools 4 on reverse trajectory 7. These carriers 1 with work-pieces 3 move in this case along the circular reverse trajectory at velocity v3. For example, carrier 2 with tool 4,A during its return on reverse trajectory 7 within φA angle performs machining operation A on additional work-piece 3 moving on carrier 1 along outer trajectory 8; carriers 2 with tools 4,B during their return on reverse trajectory 7 within φB angle perform machining operations B on additional work-pieces 3 moving on carriers 1 along outer trajectory 8; carriers 2 with tools 4, C during their return on reverse trajectory 7 within φC angle perform machining operations C on additional work-pieces 3 moving on carriers 1 along outer trajectory 8; carriers 2 with tools 4,D during their return on reverse trajectory 7 within φD angle perform machining operations D on additional work-pieces 3 moving on carriers 1 along outer trajectory 8. This arrangement can be also used for standstill carriers 1 with work-pieces 3 in Figs. 5-8.

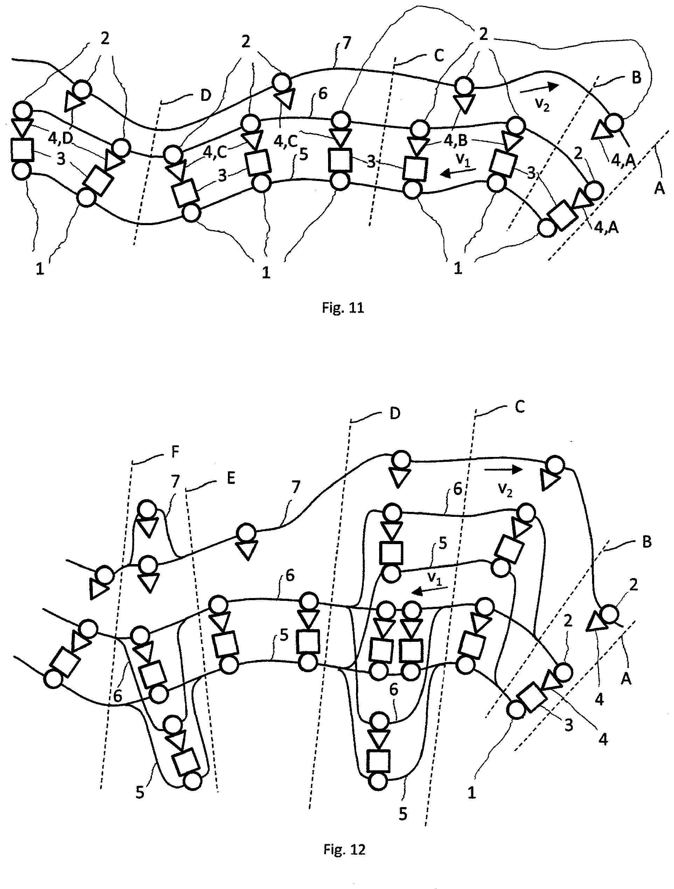

Fig. 11 shows a schematic depiction of another embodiment of the multi-spindle machine tool. In contrast to the arrangement in Figs. 1-10, work-piece carrier trajectory 5, tool carrier trajectory 6, reverse trajectory 7, are formed by non-circular trajectories, which are not even closed. Fig. 11 shows, instead of φA, φB, φC, φD angles in Figs. 1-10, only areas for performing particular operations, for example between boundaries A and B operation A is carried out, between boundaries B and C operation B is carried out, between boundaries C and D operation C is carried out and behind boundary D operation D is carried out. As in Figs. 1-10, in the section of operation A between boundaries A and B carrier 2 with tool 4,A moves along tool carrier trajectory 6 and performs operation A on work-piece 3 and carrier 2 with tool 4,A moves along reverse trajectory 7 and returns to the beginning of the section for operation A. Similarly in the section of operation B between boundaries B and C carriers 2 with tools 4,B move along tool carrier trajectory 6 and perform operations B on work-pieces 3 and carrier 2 with tool 4,B moves along reverse trajectory 7 and returns to the beginning of the section for operation B; in the section of operation C between boundaries C and B carriers 2 with tools 4,C move along tool carrier trajectory 6 and perform operations C on work-pieces 3 and carrier 2 with tool 4,C moves along reverse trajectory 7 and returns to the beginning of the section for operation C; finally in the section of operation D behind boundary D carriers 2 with tools 4,D move along tool carrier trajectory 6 and perform operations D on work-pieces 3 and carrier 2 with tool 4,D moves along reverse trajectory 7 and returns to the beginning of the section for operation D. Here the relations between velocities v1 and v2, possibly v3, are not defined by angular velocities on circular trajectories as in Figs. 1-10, but by conditions of the movement of tools during performing the particular machining operations, when more machined work-pieces 3 are used for longer operations than for shorter operations. This arrangement can be also used for standstill carriers 1 with work-pieces 3 in Figs. 5-8. This embodiment can be also used for machining additional work-pieces 3 as in Fig. 10.

Fig. 12 shows a schematic depiction of another embodiment of the multi-spindle machine tool. In contrast to the arrangement in Figs. 1-11, work-piece carrier trajectory 5, tool carrier trajectory 6 and reverse trajectory 7 are not formed by one curve, but they can be branched to parallel trajectories.

Fig. 12 shows performing operations A, B, C, D, E, F requiring different durations, which leads to different number of carriers 1 with work-pieces 3 and relevant carriers 2 with tools 4. Work-piece carrier trajectory 5, tool carrier trajectory 6, reverse trajectory 7 for operation A are not branched, work-piece carrier trajectory 5 and tool carrier trajectory 6 for operations B,C are branched, but reverse trajectory 7 is not branched, work-piece carrier trajectory 5, tool carrier trajectory 6, reverse trajectory 7 for operation D are not branched, all work-piece carrier trajectory 5, tool carrier trajectory 6, reverse trajectory 7 for operation E are branched, work-piece carrier trajectory 5, tool carrier trajectory 6, reverse trajectory 7 for operation F are not branched. When trajectories are branched, a number of branches may correspond to a number of carriers 1 with work-pieces 3 and relevant carriers 2 with just working tools 4, as in operations A, B, D, E, F, then in each branch there is just one carrier 1 with work-piece 3 and carrier 2 with tool 4. However, particular branches can also comprise more carriers 1 with work-pieces 3 and carriers 2 with tools 4, as in operation C. The same can be used for reverse trajectory 7 and its branches for carriers 2 with returning tools 4. An advantage of branching is that paths for the motion of carriers 1 or 2 are shorter.

If there is a continuous motion, then this condition is realized by the machine control system and means a motion with non-zero velocity towards the machine frame for most of the time of machine run with a possible exception of several moments, when stopping of a motion with zero velocity may occur. However, this only occurs in a neglectable fraction of time of the machine run. Velocities v1, v2, v3 can generally be different in various sections and branches. The motion of the equipment is computer controlled.

The above mentioned variants may combine. Further, instead of the use of one carrier 2 with tool 4 more carriers with tools 4 can be used for a particular machining operation, then one operation can be performed by more tools at the same time.

An advantage of the described variants of the multi-spindle machine tool embodiment is that using the continuous motion of carriers 1 with work-pieces 3, waiting for their move between the places for the particular machining operations is eliminated and using more machined work-pieces 3 for longer operations than for shorter operations, waiting for finishing the longest operation as in existing solutions is eliminated.

The proposed embodiment brings-in a solution, where work is optimally divided between more machines/tools and the continuous production time is reduced proportionally to the available (disponible) machines/tools without problems of manipulation with semi-products and with different times for performing partial operations.

The proposed solution has not been used so far on existing multi-spindle automatic machines, for which the innovation process has already been lasting for 100 years and, as a matter of fact, these multi-spindle automatic machines represent one of solutions how to use more machines/tools to make manufacturing faster. The proposed solution solves the issues concerning the time for semi-product handing-over and idle times due to different durations of performing partial operations.

Generally, it is evident that if some operation lasts for a long time, more machines/tools could be helpful. However, it is not evident how to do it, when operations are carried out in a following sequence of work-pieces, either series or parallel. This is solved here, that, in contrast to the today's state-of-the-art, more work-pieces are machined using an identical (one) operation. Each work-piece is only machined by one tool, but they are divided to groups comprising a number proportional to the duration of the particular operation (see relationship $nA = n\ \varphi A/2\pi = n\ tA/(tA+ tB+ tC+ tD)$), thus a new arrangement of the multi-spindle automatic machine is achieved, bringing-along substantial productivity enhancement, or more precisely shortening of time for machining one work-piece by all operations. If a number n of disposable places, or carriers with clamped work-pieces, increases, then the arrangement as described in the application will lead to a decrease in the total time of work-piece machining by all operations.

## Claims

1. A multi-spindle machine tool for performing at least two different operations on a work-piece clamped in a work-piece carrier arranged on a trajectory of work-piece carriers, where for each operation on the work-piece a tool attached to a tool carrier is arranged on a trajectory of tool carriers on the machine, **characterized in that** a number of work-pieces (3) on trajectory (5) of carriers (1) of work-pieces (3) for performing a particular operation is the same as a number of tools (4) on trajectory (6) of carriers (2) of tools (4) performing this operation, whereas the number of tools (4) for operations on work-piece (3) needing a longer time to be performed is higher than the number of tools (4) for operations on work-piece (3) needing a shorter time and in the particular operations is proportional to disposable carriers within a range of an angle or area for performing the particular operation, and whereas a reversible trajectory (7) is arranged on the multi-spindle machine tool to move the carriers (2) with the tools (4) in the opposite direction to the direction of movement of the carriers (2) with the tools (4) on the trajectory (6).

2. The multi-spindle machine tool as described in Claim 1, **characterized in that** carriers (1) of work-pieces (3) on trajectory (5) and carriers of tools (4) on trajectory (6) are arranged by moving in a continuous uninterrupted motion at a congruent angular velocity

3. The multi-spindle machine tool as described in Claim 1, **characterized in that** carriers (1) of work-pieces (3) on trajectory (5) and carriers (2) of tools (4) on trajectory (6) are motionless towards a frame, whereas the carriers (2) of tools (4) on reverse trajectory (7) are arranged by moving.

4. The multi-spindle machine tool as described in Claims 1 to 3, **characterized in that** tools (4) are arranged on circular trajectory (6) of carriers (2) with tools (4) and work-pieces (3) are arranged on circular trajectory (5) of carriers (1) for work-pieces (3).

5. The multi-spindle machine tool as described in Claims 1 to 3, **characterized in that** tools (4) are arranged on non-closed trajectory (6) of carriers (2) with tools (4) and work-pieces (3) are arranged on non-closed trajectory (5) of carriers (1) with work-pieces (3).

## Patentansprüche

1. Eine Mehrspindel-Bearbeitungsmaschine für Durchführung von mindestens zwei verschiedenen Operationen auf einem Werkstück montierten im Träger des Werkstück angeordneten auf der Trajektorie der Werkstückträger, wo für jede Operation auf dem Werkstück ist auf der Bearbeitungsmaschine ein Werkzeug angeordnet befestigt im Werkzeugträger auf der Trajektorie der Werkzeugträger, **gekennzeichnet dadurch, dass** die Werkstückzahl (3) auf der Trajektorie (5) der Träger (1) der Werkstücke (3) für die Durchführung der einzelnen Operation gleich mit der Werkzeugzahl (4) auf der Trajektorie (6) der Träger (2) der Werkzeuge (4) durchführende diese Operation ist, wobei diese Werkzeugezahl (4) für die Operationen auf dem Werkstück (3) mit längerer Zeit ist größer als Werkzeugzahl (4) für die Operationen auf dem Werkstück (3) mit kurzer Zeit und ist in zuständigen Operationen proportional den disponiblen Trägern im Bereich des Winkel oder Gebiet für Durchführen der zuständigen Operation und wobei auf der Mehrspindel-Bearbeitungsmaschine eine umkehrbare Trajektorie (7) für eine Bewegung der Träger (2) mit den Werkzeugen (4) in der umgekehrter Richtung zur Bewegungsrichtung der Träger (2) mit Werkzeugen (4) auf der Trajektorie (6) angeordnet ist.

2. Die Mehrspindel-Bearbeitungsmaschine nach dem Anspruch 1, **gekennzeichnete dadurch, daß** die Träger (1) der Werkzeuge (3) auf der Trajektorie (5) und die Träger der Werkzeuge (4) auf der Trajektorie (6) für eine Bewegung mit einer kontinuierlichen ununterbrochenen Bewegung mit einer gleichen Winkelgeschwindigkeit angeordnet sind.

3. Die Mehrspindel-Bearbeitungsmaschine nach dem Anspruch 1, **gekennzeichnete dadurch, daß** die Tröger (1) der Werkzeuge (3) auf der Trajektorie (5) und die Träger (2) der Werkzeuge (4) auf der Trajektorie (6) gegenüber den Rahmen stillstehen, wobei die Träger (2) der Werkzeuge (4) auf der umkehrbaren Trajektorie (6) beweglich angeordnet sind.

4. Die Mehrspindel-Bearbeitungsmaschine nach dem Anspruch 1 bis 3, **gekennzeichnete dadurch, dass** die Werkzeuge (4) auf einer Kreistrajektorie (6) der Träger (2) der Werkzeuge 2 (4) und die Werkstücke (3) auf einer Kreistrajektorie (5) der Träger (1) der Werkzeuge (3) angeordnet sind.

5. Die Mehrspindel-Bearbeitungsmaschine nach dem Anspruch 1 bis 3, **gekennzeichnete dadurch, dass** die Werkzeuge (4) auf einer nicht geschlossenen Trajektorie (6) der Träger (2) der Werkzeuge (4) und die Werkstücke (3) auf einer nicht geschlossenen Trajektorie (5) der Träger (1) der Werkzeuge (3) angeordnet sind.

**Revendications**

1. La machine-outil multibroches pour effectuer au moins deux opérations différentes sur une pièce d'ouvrage fixée dans un porte-pièce d'ouvrage agencé sur une trajectoire des porte-pièce de pièces d'ouvrage, dans laquelle pour chaque opération sur une pièce d'ouvrage, un outil monté sur un porte-outil est disposé sur la machine-outil sur une trajectoire des porte-outil, **caractérisé en ce que** le nombre de pièces d'ouvrage (3) sur une trajectoire (5) de porte-pièce (1) de pièces d'ouvrage (3) pour effectuer une seule opération est égale au nombre d'outils (4) sur une trajectoire (6) des porte-outil (2) d'outils (4) réalisant cette opération, ce nombre d'outils (4) étant plus important pour les opérations sur la pièce d'ouvrage (3) avec un temps plus long est supérieur au nombre d'outils (4) pour les opérations sur la pièce d'ouvrage (3) avec un temps plus court et est proportionnel aux supports disponibles dans la plage d'angle ou de surface pour effectuer l'opération respective et dans lequel une trajectoire de retour (7) est agencée sur la machine-outil multibroche pour déplacer les porte-outil (2) avec les outils (4) dans le sens opposé au sens de déplacement des porte-outil (2) avec les outils (4) sur la trajectoire (6).

2. La machine-outil multibroches selon la revendication 1, **caractérisée en ce que** les porte-pièces (1) de pièces d'ouvrage (3) sur une trajectoire (5) et les porte-outil (4) sur la trajectoire (6) sont agencés pour se déplacer en un mouvement continu en vitesse angulaire identique.

3. La machine-outil multibroche selon la revendication 1, **caractérisé en ce que** les porte-pièces (1) de pièces d'ouvrage (3) sur la trajectoire (5) et les porte-outils (2) d'outils (4) sur la trajectoire (6) sont au repos par rapport au bâti, les porte-outils (2) d'outils (4) sur la trajectoire de retour (6) étant disposés de manière mobile.

4. La machine-outil multibroches selon les revendications 1 à 3, **caractérisée en ce que** les outils (4) sont disposés sur une trajectoire circulaire (6) des porte-outil (2) d'outils (4) et les pièces d'ouvrage (3) sur une trajectoire circulaire (5) des porte-pièces (1) de pièces d'ouvrage (3).

5. La machine-outil multibroches selon les revendications 1 à 3, **caractérisée en ce que** les outils (4) sont disposés sur une trajectoire ouverte (6) des porte-outil (2) d'outils (4) et les pièces d'ouvrage (3) sont disposés sur la trajectoire ouverte (5) des porte-pièce (1) de pièces d'ouvrage (3).

Fig. 1

Fig. 2

Fig. 3

Fig. 4

Fig. 5

Fig. 6

Fig. 7

Fig. 8

Fig. 9

Fig. 10

Fig. 11

Fig. 12

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0807490 A2
- US 4554723 A